# EUROPÄISCHE PATENTSCHRIFT

(11) **EP 2 513 910 B1**
(45) Veröffentlichungstag und Bekanntmachung des Hinweises auf die Patenterteilung: **29.01.2014**
(21) Anmeldenummer: 11728789.6
(22) Anmeldetag: 30.05.2011
(51) Int. Cl.: G21C 19/30, G21C 19/307, G21F 9/04, B01D 27/00, B01D 35/00

(54) **FILTER FÜR KÜHLWASSER EINES PRIMÄRKREISLAUFS EINES KERNKRAFTWERKS UND VERFAHREN ZUM FILTERN VON KÜHLWASSER**
FILTER FOR COOLING WATER OF A PRIMARY CIRCUIT OF A NUCLEAR POWER STATION, AND A METHOD FOR FILTERING COOLING WATER
FILTRE POUR EAU DE REFROIDISSEMENT D'UN CIRCUIT PRIMAIRE DE CENTRALE NUCLÉAIRE ET PROCÉDÉ DE FILTRATION D'EAU DE REFROIDISSEMENT

(30) Priorität: 15.07.2010 DE 102010031385
(43) Veröffentlichungstag der Anmeldung: 24.10.2012
(73) Patentinhaber: AREVA GmbH, 91052 Erlangen (DE)
(72) Erfinder: BROCKMÖLLER-MEINERS, Arne, 24635 Rickling (DE)
(74) Vertreter: Meissner, Bolte & Partner
(86) Internationale Anmeldenummer: PCT/EP2011/058818
(87) Internationale Veröffentlichungsnummer: WO 2012/007220

(56) Entgegenhaltungen:
- DE-A1- 3 603 951
- GB-A- 2 061 123
- US-A- 5 479 461

## Beschreibung

Die Erfindung betrifft einen Filter für einen Primärkreislauf eines Kernkraftwerks. Der Primärkreislauf führt zu filterndes Kühlwasser. Die Erfindung betrifft auch ein Verfahren zum Filtern des genannten Kühlwassers.

Das den Primärkreislauf eines Kernkraftwerks durchströmende Kühlwasser mündet an in der Regel mehreren Austrittsöffnungen in das Innere des Reaktorbehälters. Austrittsöffnungen sind zum Beispiel die sogenannten Cl-bis C4-Stutzen eines Siedewasserreaktors. Im Betrieb des Reaktors sind an den Austrittsöffnungen in der Regel Reaktoreinbauten angeflanscht, die z.B. das einströmende Kühlwasser verteilen. Beim o.g. Siedewasserreaktor ist dies ein Speisewasserverteiler. Beim Revisionsstillstand des Kraftwerks wird dieser Speisewasserverteiler von den C1-4-Stutzen abmontiert, woraufhin diese bzw. deren Anschlussflansche frei zugänglich sind.

Während des Betriebs eines Kernkraftwerks kommt es immer wieder zum Eintrag von Fremdkörpern in das Kühlwasser des Primärkreislaufs eines Kernkraftwerks. Fremdkörper sind zum Beispiel Kleinstteile, die sich im Reaktorbehälter während des Betriebs von Einbauten oder Brennelementen lösen.

Zum Beispiel ist es bekannt, in einem Kernkraftwerk mit Siedewasserreaktor im Reaktorbehälter Gewebematten aus Metalldrähten zu verwenden. Die Matten werden aufgrund von Wärmeverlusten als Isolation des Reaktordruckbehälterdeckels verwendet. Die Metalldrähte weisen einen Durchmesser von 0,1µm auf. Die Matten werden in den Reaktorbehälter eingebracht und dort passend zurechtgeschnitten. Hierbei gelangen Schneidrückstände in Form von Drahtstücken ins primärseitige Kühlwasser. Derartige Kleinstteile befinden sich als Schwebeteile im Kühlwasser und verursachen z.B. Frettingschäden an Brennelementen bei Betrieb des Kraftwerks. Die Kleinstteile können aufgrund ihrer geringen Größe bzw. Vielzahl zum Beispiel nicht durch Manipulatoren einzeln aus dem Kühlkreislauf entfernt werden, sondern nur durch eine entsprechende Filterung des Kühlwassers.

Denkbar wäre es, in Rohrleitungen des sich außerhalb des Reaktorbehälters befindlichen Primärkühlkreislaufs Filter einzubauen. Dies ist jedoch ein aufwändiger Prozess, da das Kühlsystem des Reaktors verändert wird. Hierzu sind teure und aufwändige behördliche Genehmigungsverfahren notwendig. Außerdem ist das auszufilternde Filtergut, welches sich dann außerhalb des Reaktorbehälters im Filter des Rohrleitungssystems sammelt, in der Regel hochradioaktiv. Im Bereich des Filters wird damit außerhalb des Reaktorbehälters eine Strahlungsquelle geschaffen, die unter Umständen eine nicht unerhebliche Dosisleistung abgibt. Aufwändige, nicht unproblematische und teure Strahlenschutzmaßnahmen, insbesondere bei einem Filterwechsel, sind zu ergreifen.

Aus der DE 36 03 951 C2 ist es bekannt, eine Filtriervorrichtung an Stelle eines Brennelements in die untere Kernträgerplatte einzusetzen, um zirkulierendes Wasser des Primärkreislaufes zu filtern.

Aufgabe der vorliegenden Erfindung ist es, einen verbesserten Filter und ein verbessertes Verfahren zum Filtern des oben genannten Kühlwassers anzugeben.

Hinsichtlich des Filters wird die Aufgabe gelöst durch einen Filter gemäß Patentanspruch 1. Die Erfindung ist für solche Kernkraftwerke geeignet, deren in das Innere des Reaktors mündende Austrittsöffnung für Kühlwasser während eines Revisionsstillstands des Kraftwerks in dem Sinne zugänglich ist, dass dort der Filter anbringbar ist. Mit anderen Worten muss an der Austrittsöffnung zumindest während des Revisionsstillstands eine Filtermontage möglich sein. Der Filter befindet sich dann im montierten Zustand im Inneren des Reaktorbehälters unter Wasser, also im Kühlwasser.

Der erfindungsgemäße Filter weist einen Grundträger auf, der wiederum einen Eingang für zu filterndes Kühlwasser aufweist. Der Filter enthält außerdem mindestens eine im Grundträger austauschbar gehaltene Filterpatrone, welche fluidisch an den Eingang gekoppelt ist. Erfindungsgemäß weist der Filter eine Fixiereinrichtung auf die an der Austrittsöffnung des Reaktorbehälters befestigbar ist. Die Befestigung geschieht derart, dass der Eingang fluidisch an die Austrittsöffnung ankoppelt.

Das aus der Austrittsöffnung strömende Kühlwasser fließt also über den Eingang zur Filterpatrone und durchströmt diese, wobei das Wasser gefiltert wird. Das gefilterte Wasser tritt entweder an einem sich fluidisch an die Filterpatrone anschließenden Ausgang des Grundträgers oder direkt an der Filterpatrone wieder aus. Im letzteren Fall entartet mit anderen Worten der Ausgang zu einer Ausströmöffnung der Filterpatrone. Da sich der Filter im Reaktorinneren befindet, gelangt das austretende Wasser direkt in das Reaktorinnere.

Ist also mit anderen Worten der Filter an der Austrittsöffnung fixiert, muss durch die Austrittsöffnung strömendes Kühlwasser zunächst vollständig auf seinem Weg durch Eingang und Filterpatrone den Filter passieren, bevor es vom Ausgang des Filters aus in das Innere des Reaktorbehälters gelangt. Sämtliches, durch die Austrittsöffnung strömendes Kühlwasser wird also zunächst gefiltert und gelangt nur vollständig gefiltert in den Reaktorbehälter. Erst dann setzt es seinen weiteren Weg im Kühlkreislauf fort.

Grundidee der Erfindung ist es, an die frei zugänglichen Austrittsöffnungen während des Revisionsstillstands einen Filter anzuschließen und den Kühlkreislauf auch im Revisionsstillstand zu betreiben, um das Kühlwasser während des Revisionsstillstands durch den Filter zu leiten und zu filtern. Bei dem o.g. Siedewasserreaktor sind zum Beispiel während des Revisionsbetriebs Durchströmungen von ca. 500l/s pro Anschlussstutzen möglich. Eine projektierte Filterleistung bei angeschlossenem Filter liegt bei ca. 100l/s pro Stutzen. Bei einem derartigen Betrieb ist beim bekannten Reaktor rein rechnerisch nach ca. 6 Stunden Laufzeit das gesamte Kühlwasser einmal getauscht, das heißt durch die vier Filter an den C1- bis C4-Stutzen geströmt. Durch eine Umwälzzeit im Primärkreislauf über die gesamte Dauer eines Revisionsstillstandes von z.B. drei Monaten können so durch die vielfache Umwälzung des Kühlwassers durch die Filter nahezu sämtliche Kleinschwebeteile aus dem Primärkreislauf entfernt werden. Ein vergleichbares Konzept, das Wasser des Primärkreislaufs lediglich während des Revisionsstillstandes zu filtern, ist nicht bekannt.

Da der Filter nur während der Revision benutzt wird und nicht während des Betriebs des Kernkraftwerks und außerdem nicht fest, also während des Betriebs, in der Anlage installiert wird, ist keine Behördenzulassung notwendig. Die Montage des Filters ist einfach und unaufwändig gegenüber der Montage in einer außerhalb des Reaktors gelegenen Rohrleitung. Da sich der Filter innerhalb des Reaktorkerns befindet, wo ohnehin radioaktives Material vorhanden ist und sich der Filter außerdem unter Wasser, nämlich innerhalb des Kühlwassers befindet, ergeben sich strahlungstechnische Vorteile. Während des Filterns verbleibt gesammeltes Filtergut in der Filterpatrone unter Wasser, so dass hier keine zusätzliche Dosisbelastung im Kernkraftwerk entsteht. Filterein- und -ausbau finden unter Wasser, also strahlengeschützt statt. Auch ein Wechsel der Filterpatronen bei montiertem Filter ist vollständig unter Wasser und damit ohne Entstehung von Strahlenbelastung möglich.

Der Filter ermöglicht es, in den Reaktorbehälter beziehungsweise den Primärkreislauf eingetragene Fremdkörper auszufiltern, zum Beispiel die oben genannten Kleinstdrähte. Da der Filter während der gesamten Revisionszeit im Einsatz bleiben kann beziehungsweise durch durchströmt werden kann, ergibt sich eine sehr hohe Filtrierleistung durch permanentes Durchströmen des Filters. Indirekt ergibt sich durch die Filterung des Wassers eine verbesserte Vermeidung von Brennelementschäden, zum Beispiel in Form des o.g., von Schwebeteilchen verursachten Frettings.

Durch die Anordnung des Filters im Reaktorinneren unter Wasser kann dieser auch nach Abschluss des Filtervorgangs wie jedwedes radioaktives Material aus dem Reaktorinneren unter Wasser, z.B. durch die Transportschleuse ins Brennelementlagerbecken verbracht und von dort strahlensicher entsorgt werden. Dies gilt für den Filter und die unter Umständen auszutauschenden Filterpatronen.

In einer bevorzugten Ausführungsform der Erfindung ist der Filter für die Speisewasserzuführung eines Siedewasserreaktors vorgesehen. Mit anderen Worten ist also der Reaktorbehälter ein Siedewasserreaktor und die Austrittsöffnung dessen Speisewasserzuführung, wie oben bereits erläutert.

In einer weiteren bevorzugten Ausführungsform weist der Grundträger einen Flansch auf, der an der Austrittsöffnung befestigbar ist, wobei der Flansch den Eingang aufweist. Da im Betrieb des Reaktors in der Regel an der Austrittsöffnung ein Einbauteil des Kernreaktors angeschlossen ist, zum Beispiel der oben genannte Speisewasserverteiler angeflanscht ist, stehen bei Demontage der entsprechenden Einbauten im Revisionsstillstand diverse, zu dieser Zeit nicht benötigte Flansche o.ä. an den Austrittsöffnungen zur Verfügung. Mit anderen Worten braucht der Filter also nur einen auf den entsprechenden Flansch des Reaktors abgestimmten Flansch bzw. Gegenflansch enthalten. Der Filter wird dann ähnlich dem im Betrieb montierten Einbauteil mit seinem Flansch an der Austrittsöffnung beziehungsweise deren Flansch befestigt. So ist ein besonders sicherer und zuverlässiger Halt gewährleistet.

In einer weiteren bevorzugten Ausführungsform ist die Filterpatrone im Montagezustand des Filters, wenn dieser also im Reaktorbehälter an der Austrittsöffnung befestigt ist, so ausgerichtet, dass gesammeltes Filtergut in dieser in Schwerkraftrichtung einliegt. Mit anderen Worten ist dadurch die Filterpatrone so ausgestaltet, dass bei Abschalten des Kühlkreislaufs Filtergut weder aus dem Filter noch zurück in den Primärkreislauf gelangen kann. Eine zusätzliche Rückhaltevorrichtung für gesammeltes Filtergut in der Filterpatrone ist damit überflüssig. Ist die Filterpatrone zum Beispiel hohlzylinderförmig und sacklochartig ausgebildet, mit einer Eintrittsöffnung am einen Längsende, so ist der Filter beziehungsweise die Patrone so konstruiert, dass die Eintrittsöffnung in Schwerkraftrichtung stets nach oben weist, also den höchsten Punkt der Filterpatrone bildet.

In einer weiteren bevorzugten Ausführungsform ist der Filter bzw. die Filterpatrone so gestaltet, dass im Montagezustand des Filters an der Austrittsöffnung diese so aus dem Grundkörper entnehmbar ist, dass das gesammelte Filtergut während des Austauschs in der Patrone in Schwerkraftrichtung einliegt. Mit anderen Worten ist der Filter derart konstruiert, dass die Filterpatrone beim Entnehmen nicht derart gegen die Schwerkraftrichtung verkippt werden muss, dass Filtergut herausgelangen könnte. Zum Beispiel ist eine oben genannte zylinderförmige Patrone mit nach oben gerichteter Eintrittsöffnung auch senkrecht nach oben aus dem Filter entnehmbar. So muss diese hierbei nicht verkippt werden.

In einer weiteren bevorzugten Ausführungsform ist der Einlass im Montagezustand des Filters an der Unterseite des Filters angeordnet. Dies ist zum Beispiel notwendig, wenn die Austrittsöffnung nach oben, also entgegen der Schwerkraftrichtung weist und daher der Filter auf diese aufzusetzen ist. Der Filter enthält dann ein vom Einlass zur Oberseite des Filters führendes Steigrohr, welches wiederum von der Oberseite her in die Filterpatrone mündet. So ist ein unterseitiger Einlass des Filters mit den oben genannten Vorteilen kombinierbar, das Filtergut sich in Schwerkraftrichtung in der Filterpatrone sammelt beziehungsweise der Filter immer in Schwerkraftrichtung durchströmt wird und sich so Filtergut in Schwerkraftrichtung ansammeln kann. Im Filter sind dann beispielsweise die Filterpatronen auf Höhe der Steigrohre angeordnet und im Falle mehrerer Filterpatronen ein vom Steigrohr zu den Filterpatronen führender Verteiler oben auf den Filter aufgesetzt.

In einer bevorzugten Ausführungsform weist die Filterpatrone einen auf das gewünschte Filtergut angepassten Filtereinsatz auf. Beispielsweise besteht in einem Kernkraftwerk die spezielle Aufgabe, die oben genannten Drahtbruchstücke eines Drahtes von 3µm Durchmesser auszufiltern. Es kann dann z.B. ein Filter eingesetzt werden, der sämtliche Teile größer 1µm aus dem Kühlwasser herausfiltert. Die zu verwendenden Filter sind variabel.

Hinsichtlich des Verfahrens wird die Aufgabe gelöst durch ein Verfahren gemäß Patentanspruch 8. Während des Revisionsstillstandes des Kraftwerks wird demnach ein oben erläuterter erfindungsgemäßer Filter vermittels seiner Fixiereinrichtung mit seinem Eingang an die Austrittsöffnung ankoppelnd befestigt. Das Kühlwasser wird dann durch die Austrittsöffnung zirkuliert. Nach erfolgtem Filtervorgang wird vor Beendigung des Revisionsstillstandes der Filter wieder von der Austrittsöffnung und aus dem Reaktorbehälter entfernt.

Das erfindungsgemäße Verfahren wurde zusammen mit seinen Vorteilen bereits im Zusammenhang mit dem erfindungsgemäßen Filter erläutert.

Gemäß einer bevorzugten Ausführungsform des Verfahrens wird die Kühlwassermenge mehrfach durch den Filter zirkuliert. Hierbei wird insbesondere das gesamte Kühlwasser mehrfach gefiltert, wenn an allen Austrittsöffnungen, welche in das Reaktorinnere münden, jeweils ein Filter angebracht wird.

In einer bevorzugten Ausführungsvariante wird die Kühlwasserzirkulation unterbrochen, eine mit Filtergut gefüllte Filterpatrone unter Wasser aus dem Filter entnommen und entsorgt. Im Austausch wird eine neue Filterpatrone in den Filter eingesetzt und die Kühlwasserzirkulation wieder aufgenommen. So können z.B. kleinere Filterpatronen eingesetzt werden, die eine kleinere Kapazität für Filtergut aufweisen. Der Filter weist dadurch einen kleineren Bauraum auf.

Für eine weitere Beschreibung der Erfindung wird auf die Ausführungsbeispiele der Zeichnungen verwiesen. Es zeigen, jeweils in einer schematischen Prinzipskizze:
- Fig.1: einen Ausschnitt aus einem Kernkraftwerk im Revisionsstillstand mit erfindungsgemäßem Filter im Schnitt,
- Fig.2: einen alternativen Filter gemäß der Erfindung in räumlicher Darstellung,
- Fig.3: das Unterteil des Filters aus Fig.2 in einer Darstellung gemäß Fig. 2,
- Fig.4: das Oberteil des Filters aus Fig.2 in einer Darstellung gemäß Fig. 2,
- Fig.5: eine in den Filter aus Fig.2 eingesetzte Filterpatrone im Schnitt.

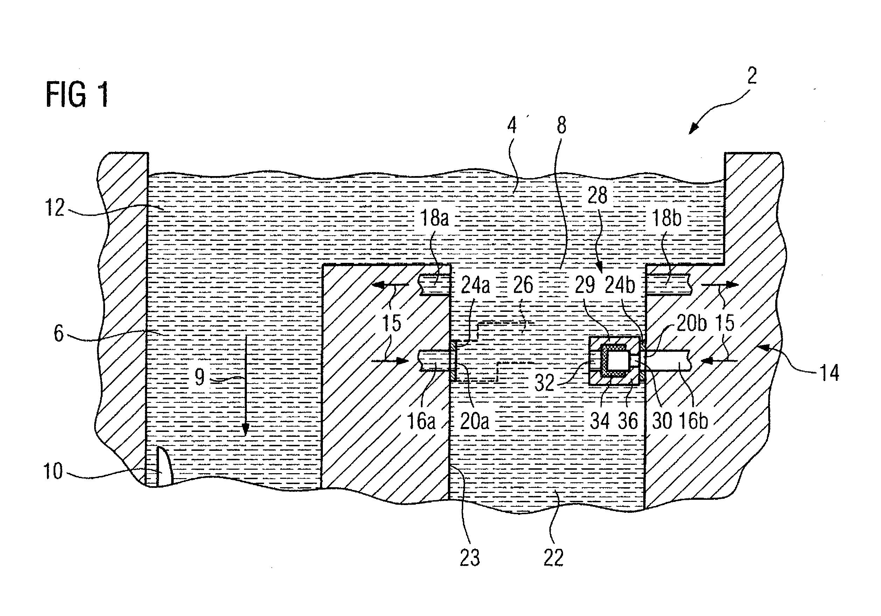

Fig.1 zeigt einen Ausschnitt aus einem Kernkraftwerk 2, nämlich dessen Reaktorbehälter 4 und ein an diesen anschließendes Brennelementlagerbecken 6. Das Kernkraftwerk 2 befindet sich im Revisionsstillstand, weshalb von der oberen Öffnung 8 des Reaktorbehälters 4 - in einer Schwerkraftrichtung 9 gesehen - der Reaktorbehälterdeckel 10 entfernt und im Brennelementlagerbecken 6 zwischengelagert wurde.

Der Reaktorbehälter 4 weist einen Primärkreislauf 14 auf, durch welchen im Betrieb oder auch während des gezeigten Revisionsstillstandes Kühlwasser 12 zirkuliert. Aufgrund des Revisionsstilltandes ist der gesamte dargestellte Teil des Kernkraftwerks 2 mit Kühlwasser 12 geflutet. Zum Primärkreislauf 14 gehören am Reaktorbehälter 4 angebrachte Speisewasserleitungen 16a,b sowie Frischdampfleitungen 18a,b. Die Strömungsrichtungen des Kühlwassers 12 durch den Primärkreislauf 14 sind in Fig. 1 durch Pfeile 15 dargestellt. Beim Betrieb des Primärkreislaufs tritt Kühlwasser 12 durch die Austrittsöffnungen 20a,b der Speisewasserleitungen 16a,b in das Innere 22 des Reaktorbehälters 4 ein. Von den je vier in Umfangsrichtung des Reaktorbehälters 4 verteilten Öffnungen sind in Fig.1 nur jeweils zwei dargestellt.

Die Austrittsöffnungen 20a,b befinden sich an der Innenwand 23 des Reaktorbehälters 4 und weisen jeweils einen Flansch 24a,b auf, an welchem beim Betrieb des Kernkraftwerks 2 ein Kernbauteil 26 in Form eines Speisewasserverteilers angeschlossen ist, in welches das gesamte durch die Speisewasserleitungen 16a,b zugeführte Kühlwasser 12 strömt. Während des Revisionsstilltandes wird das Kernbauteil 26 entfernt, weshalb es in Fig.1 nur gestrichelt dargestellt ist.

Gemäß der Erfindung ist während des Revisionsstillstandes an jeder der Austrittsöffnungen 20a,b (in Fig.1 nur für die Austrittsöffnung 20b dargestellt) ein Filter 28 angebracht. Der Filter 28 weist einen Grundträger 29 auf. An diesem sind ein Eingang 30 und ein Ausgang 32 vorgesehen. Fluidisch zwischen Eingang 30 und Ausgang 32 ist eine Filterpatrone 34 geschaltet, die austauschbar im Grundträger 29 gehalten ist. Außerdem besitzt der Filter 28 bzw. der Grundträger 29 eine Fixiereinrichtung 36, mit welcher er an der Austrittsöffnung 20b befestigt ist. Der Filter 28 bzw. dessen Befestigung ist derart gestaltet, dass das gesamte durch die Austrittsöffnung 20b in den Reaktorbehälter 4 einströmende Kühlwasser 12 zunächst durch den Eingang 30 und die Filterpatrone 34 strömt und erst durch den Ausgang 32 in das Innere 22 des Reaktorbehälters 4 gelangt. Mit anderen Worten wird das gesamte durch die Austrittsöffnung 20b einströmende Kühlwasser 12 durch den Filter 28 gefiltert.

Der Primärkreislauf 14 ist derart gestaltet, dass dieser das gesamte im Kernkraftwerk 2 vorhandene Kühlwasser 12 des Primärkreislaufs 14 umwälzt. Erfindungsgemäß ist an jeder der vier Austrittsöffnungen 20a,b je ein Filter 28 angeschlossen. Bei Umwälzung des Kühlwassers 12 wird somit das gesamte Kühlwasser 12 des Primärkreislaufs 14 gefiltert.

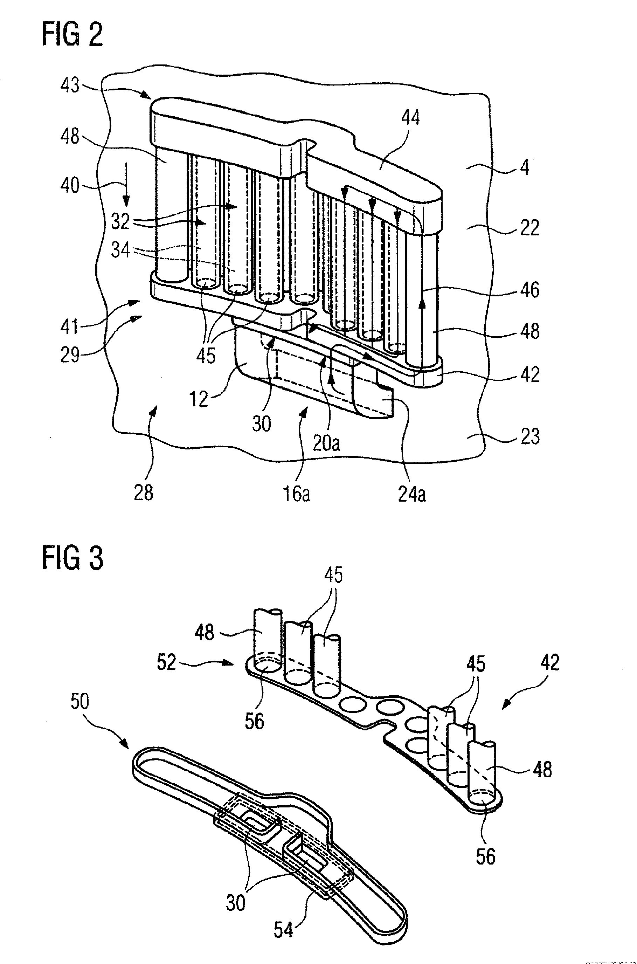

Fig.2 zeigt den Reaktorbehälter 4 aus Fig. 1 beziehungsweise dessen Innenwand 23 mit einer alternativ gestalteten Speisewasserleitung 16a. Diese ist im Inneren 22 des Reaktorbehälters 4 nach oben hin, das heißt entgegen der Schwerkraftrichtung 9 gekröpft, so dass sich die Austrittsöffnung 20a am horizontal verlaufenden oberen Ende des hohlen und in seinem Inneren Kühlwasser 12 führenden Flansches 24a befindet. Der Filter 28 weist wieder einen an die Austrittsöffnung 20a angekoppelten Eingang 30 auf. Im Grundträger 29 sind hier acht Filterpatronen 34 - gestrichelt dargestellt - gehalten. Der Filter 28 beziehungsweise Grundträger 29 weist in dieser Ausführungsform an seiner Unterseite 41 ein den Eingang 30 aufweisendes Unterteil 42 sowie an seiner Oberseite 43 ein Oberteil 44 auf. In dieser Ausführungsform sind die Filterpatronen 34 in hohlzylindrischen Filterführungen 45 gehalten, die zwischen Unterteil 42 und Oberteil 44 angebracht sind.

Kühlwasser 12 strömt bei Betrieb des Primärkreislaufes 14 durch den Flansch 24a und in Richtung der Pfeile 46 durch die Austrittsöffnung 20a und den Eingang 30, durch das Unterteil 42 in zwei endseitig am Filter 28 angebrachte Steigrohre 48 zum Oberteil 44. Letzteres leitet das Kühlwasser 12 in die acht Filterpatronen 34, die daher in Schwerkraftrichtung 9 durchströmt werden. Die Steigrohre 48 und Filterführungen sind mit Oberteil 44 und Unterteil 42 verschweißt und bilden mit diesen den Grundträger 29 als stabile Einheit.

Das Kühlwasser 12 durchströmt die Filterpatronen 34 und verlässt den Filter 28 am Zylindermantel der Filterführungen 45. Im vorliegenden Fall ist also kein gegenständlicher Ausgang im eigentlichen Sinne vorhanden, durch den das Kühlwasser 12 den Filter 28 verlässt. Der Ausgang 32 wird eher durch flächenhaft über den Zylindermantel verteilte Ausströmöffnungen der Filterführungen 45 gebildet. Da sich der Filter 28 im Inneren 22 des Reaktorbehälters 4 befindet, gelangt das austretende Wasser dennoch direkt in das Reaktorinnere. Die Pfeile 46 sind nur für vier der acht Filterpatronen 34 dargestellt.

Fig.3 zeigt das Unterteil 42 im Detail, nämlich dass dieses aus einem Aufsatz 50 und einer unteren Platte 52 aufgebaut ist. Der Aufsatz 50 weist zunächst einen Flansch 54 als Fixiereinrichtung 36 auf, welcher als Gegenflansch auf den Flansch 24a des Reaktorbehälters 4 abgestimmt ist, um auf diesem montiert zu werden. Der Aufsatz 50 beinhaltet außerdem den Eingang 30 in Form zweier Durchbrechungen. Die untere Platte 52 wird bei der Montage des Filters 28 auf den Aufsatz 50 eingelegt, sodass unterhalb derer ein Strömungskanal für Kühlwasser 12 entsteht, der vom Eingang 30 zu den beiden endseitig an der unteren Platte 52 angeordneten Durchbrechungen 56 führt. Auf den Durchbrechungen 56 sind die Steigrohre 48 angebracht. Auf acht Vertiefungen 58, welche jedoch keinen Durchgang durch die untere Platte 52 bilden, sind die acht Filterführungen 45 angebracht, in welche die Filterpatronen 34 eingesetzt werden.

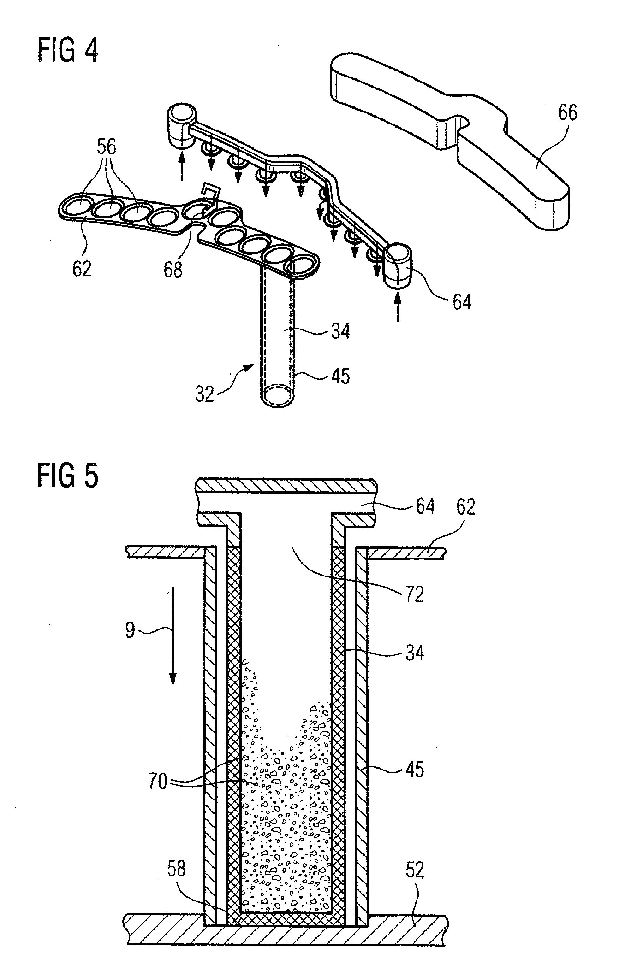

Fig.4 zeigt den Aufbau des Oberteils 44. Dieses setzt sich zusammen aus einer oberen Platte 62, einem Verteiler 64 und einem Deckblech 66. Im Gegensatz zur unteren Platte 52 weist die obere Platte 62 sowohl an den Befestigungsorten für die Steigrohre 48 als auch an den Positionen für die Filterführungen 45 Durchbrechungen 56 auf. Aufsatz 50, unterer Platte 52 Steigrohre 48, Filterführungen 45 und obere Platte 62 sind miteinander verschweißt und bilden den Grundträger 29. Der Verteiler 64 ist auf den Grundträger 29 lösbar aufzusetzen. Dies ermöglicht es, in die acht innen liegenden Durchbrechungen 56 der oberen Platte 62 die acht Filterpatronen 34 einsetzen zu können. Anschließend wird der Verteiler 64 aufgesetzt und mit Hilfe eines Mittelhalters 68 gehalten. Der Verteiler 64 schließt hierbei sowohl an die Steigrohre 48 als auch die acht Filterpatronen 34 dichtend an, um das Kühlwasser 14 zu führen.

Anschließend wird noch das Deckblech 66 aufgesetzt und damit der Filter 28 komplettiert. Der Verteiler 64 dient also dazu, das endseitig in Richtung der Pfeile 46 einströmende Kühlwasser 14 aus den Steigrohren 48 auf die acht Filterführungen 45 beziehungsweise Filterpatronen 34 zu verteilen.

Fig.5 zeigt eine Filterführung 45 mit einliegender Filterpatrone 34 im Detail bzw. Schnitt im montierten Zustand des Filters 28 im Reaktorbehälter 4. Während des Filtervorgangs sammelt sich Filtergut 70 in der Filterpatrone 34. Diese ist so orientiert, dass auch bei abgeschaltetem Primärkreislauf 14 das Filtergut 70 in Schwerkraftrichtung 9 in der Filterpatrone 34 einliegt und somit aus dieser nicht mehr entweichen kann. Das Filtergut kann so nicht in den Primärkreislauf 14 zurückgelangen.

Ein Wechsel von Filterpatronen 34 erfolgt, während der gesamte Filter 28 am Flansch 24a befestigt ist. Zum Wechsel der Filterpatrone 34 wird das Deckblech 66 entfernt und der Verteiler 64 aus dem Mittelhalter 68 gelöst und entfernt. Die Filterpatrone 34 kann dann entgegen der Schwerkraftrichtung 9 senkrecht nach oben aus der Filterführung 45 entnommen werden und muss hierbei nicht gegen die Schwerkraftrichtüng 9 verkippt werden. So ist auch verhindert, dass beim Wechsel der Filterpatronen 34 Filtergut 70 durch die Eingangsöffnung 72 austreten und in das Innere 22 des Reaktorbehälters 4 gelangen könnte.

Nach Einsetzen neuer Filterpatronen 34 wird der Filter 28 durch Anbau des Verteilers 64 und des Deckblechs 66 wieder komplettiert. Der gesamte Wechsel der Filterpatronen 34 geschieht unter Wasser, das heißt innerhalb des Kühlwassers 12. Die mit dem teilweise hochradioaktiven Filtergut 70 gefüllten Filterpatronen 34 können beispielsweise ins Brennelementlagerbecken 6 überführt werden und von dort aus entsorgt werden. All dies kann komplett unter Wasser geschehen, um eine Strahlenbelastung im Kraftwerk 2 zu vermeiden.

## Patentansprüche

1. Filter (28) für einen Kühlwasser (12) führenden Primärkreislauf (14) eines Kernkraftwerks (2) mit einem Reaktorbehälter (4) mit einer in das Innere (22) des Reaktorbehälters (4) mündenden, während eines Revisionsstillstands des Kernkraftwerks (2) zugänglichen, sich an einer Innenwand (23) des Reaktorbehälters (4) befindenden Austrittsöffnung (20a,b) einer Speisewasserleitung (16a,b) für das Kühlwasser (12),
- mit einem einen Eingang (30) aufweisenden Grundträger (29),
- mit mindestens einer am Grundträger (29) austauschbar gehaltenen, fluidisch an den Eingang (30) gekoppelten Filterpatrone (34),
- mit einer Fixiereinrichtung (36), die derart an der Austrittsöffnung (20a,b) befestigbar ist, dass der Eingang (30) fluidisch an die Austrittsöffnung (20a,b) ankoppelt.

2. Filter (28) nach Anspruch 1, bei dem der Reaktorbehälter (4) ein Siedewasserreaktor und die Austrittsöffnung (20a,b) dessen Speisewasserzuführung ist.

3. Filter (28) nach einem der vorhergehenden Ansprüche, bei dem der Grundträger (29) einen an der Austrittsöffnung (20a,b) befestigbaren, den Eingang (30) aufweisenden Flansch (54) enthält.

4. Filter (28) nach einem der vorhergehenden Ansprüche, bei dem die Filterpatrone (34) im Montagezustand so ausgerichtet ist, dass gesammeltes Filtergut (70) in dieser in Schwerkraftrichtung (9) einliegt.

5. Filter (28) nach Anspruch 4, bei dem die Filterpatrone (34) im Montagezustand so aus dem Grundträger (29) entnehmbar, ist dass das gesammelte Filtergut (70) in dieser in Schwerkraftrichtung (9) einliegt.

6. Filter (28) nach einem der vorhergehenden Ansprüche, bei dem sich der Eingang (30) im Montagezustand in Schwerkraftrichtung (9) an der Unterseite (41) des Filters (28) befindet, mit einem vom Eingang (30) zur Oberseite (43) führenden Steigrohr (48), das von der Oberseite (43) her in die Filterpatrone (34) mündet.

7. Filter (28) nach einem der vorhergehenden Ansprüche, bei dem die Filterpatrone (34) einen auf das gewünschte Filtergut (70) angepassten Filtereinsatz aufweist.

8. Verfahren zum Filtern von Kühlwasser (12) eines Primärkreislaufs (14) eines Kernkraftwerks (2) mit einem Reaktorbehälter (4) mit einer in das Innere (22) des Reaktorbehälters (4) mündenden, während eines Revisionsstillstands des Kernkraftwerks (2) zugänglichen, sich an einer Innenwand (23) des Reaktorbehälters (4) befindenden Austrittsöffnung (20a,b) einer Speisewasserleitung (16a,b) für das Kühlwasser (12), bei dem während des Revisionsstillstands:
- ein Filter (28) gemäß einem der Patentansprüche 1 bis 7 vermittels seiner Fixiereinrichtung (36) mit seinem Eingang (30) fluidisch an die Austrittsöffnung (20a,b) ankoppelnd befestigt wird,
- das Kühlwasser (12) durch die Austrittsöffnung (20a,b) zirkuliert wird,
- der Filter (28) von der Austrittsöffnung (20a,b) entfernt wird.

9. Verfahren nach Anspruch 8, bei dem die gesamte Menge des Kühlwassers (12) mehrfach durch den Filter (28) zirkuliert wird.

10. Verfahren nach Anspruch 8 oder 9, bei dem:
- die Zirkulation des Kühlwassers (12) unterbrochen wird,
- eine mit Filtergut (70) gefüllte Filterpatrone (34) unter Kühlwasser (12) aus dem Filter (28) entnommen wird,
- im Austausch eine neue Filterpatrone (34) in den Filter (28) eingesetzt wird,
- die Zirkulation des Kühlwassers (12) fortgesetzt wird.

## Claims

1. Filter (28) for a primary circuit (14), which carries coolant (12), of a nuclear power station (2) having a reactor vessel (4) having an outlet opening (20a, b) of a feed-water line (16a, b) for coolant (12), which flows into the interior (22) of the reactor vessel (4), is accessible during an inspection shutdown of the nuclear power station (2) and is located on an inner wall (23) of the reactor vessel (4),
- having a base support (29) that has an entrance (30)
- having at least one filter cartridge (34) that is held on the base support (29) so that it can be exchanged and is fluidically coupled to the entrance (30)
- having a fixing unit (36), which is able to be fixed to the outlet opening (20a, b) in such a way that the entrance (30) is fluidically coupled to the outlet opening (20a, b).

2. Filter (28) according to claim 1, in which the reactor vessel (4) is a boiling water reactor and the outlet opening (20a, b) is the feed-water supply thereof.

3. Filter (28) according to one of the preceding claims, in which the base support (29) contains a flange (54) which is able to be fixed to the outlet opening (20a, b) and has the entrance (30).

4. Filter (28) according to one of the preceding claims, in which the filter cartridge (34) is aligned in the assembled state such that collected filtered substance (70) is enclosed in this in the direction of gravitational force (9).

5. Filter (28) according to claim 4, in which the filter cartridge (34) is able to be removed from the base support (29) in the assembled state, such that the collected filtered substance (70) is deposited in this in the direction of gravitational force (9).

6. Filter (28) according to one of the preceding claims, in which, in the assembled state, the entrance (30) is located on the underside (41) of the filter (28) in the direction of gravitational force (9), having a riser pipe (48) leading from the entrance (30) to the upper side (43), said riser pipe (48) flowing from the upper side (43) into the filter cartridge (34).

7. Filter (28) according to one of the preceding claims, in which the filter cartridge (34) has a filter pad which is adapted to the desired filtered substance (70).

8. Method to filter coolant (12) of a primary circuit (14) of a nuclear power station (2) having a reactor vessel (4) having an outlet opening (20a, b) of a feed-water line (16a, b) for the coolant (12), which flows into the interior (22) of the reactor vessel (4), is accessible during an inspection shutdown of the nuclear power station (2) and is located on an inner wall (23) of the reactor vessel (4), in which method, during the inspection shutdown:
- a filter (28) according to one of claims 1 to 7 is fixed with its entrance (30) by fluidic coupling to the outlet opening (20a, b) by means of its fixing unit (36),
- the coolant (12) is circulated through the outlet opening (20a, b),
- the filter (28) is removed from the outlet opening (20a, b).

9. Method according to claim 8, in which the entire quantity of the coolant (12) is circulated through the filter (28) many times.

10. Method according to claim 8 or 9, in which:
- the circulation of the coolant (12) is interrupted,
- a filter cartridge (34) filled with filtered substance (70) is removed from the filter (28) in the presence of coolant (12),
- a new filter cartridge (34) is inserted into the filter (28) in exchange,
- the circulation of the coolant (12) is resumed.

## Revendications

1. Filtre (28) pour un circuit primaire (14) transportant de l'eau de refroidissement (12) d'une centrale nucléaire (2) comportant une cuve de réacteur (4) dotée d'une ouverture de sortie (20a, b) d'une conduite d'eau d'alimentation (16a, b) pour l'eau de refroidissement (12), ouverture débouchant à l'intérieur (22) de la cuve de réacteur (4), accessible pendant un arrêt pour révision de la centrale nucléaire (2) et se trouvant sur une paroi intérieure (23) de la cuve de réacteur (4),
- avec un support de base (29) présentant une entrée (30) ;
- avec au moins une cartouche de filtre (34) montée de façon interchangeable sur le support de base (29) et raccordée fluidiquement à l'entrée (30) ;
- avec un dispositif de fixation (36), qui peut être fixé à l'ouverture de sortie (20a, b) d'une manière telle que l'entrée (30) se raccorde fluidiquement à l'ouverture de sortie (20a, b).

2. Filtre (28) selon la revendication 1, dans lequel la cuve de réacteur (4) est un réacteur à eau bouillante et l'ouverture de sortie (20a, b) est son arrivée d'eau d'alimentation.

3. Filtre (28) selon l'une quelconque des revendications précédentes, dans lequel le support de base (29) comporte une bride (54) à fixer à l'ouverture de sortie (20a, b) et présentant l'entrée (30).

4. Filtre (28) selon l'une quelconque des revendications précédentes, dans lequel la cartouche de filtre (34) est orientée, à l'état monté, d'une manière telle que la matière filtrée accumulée (70) repose dans celle-ci dans la direction de la pesanteur (9).

5. Filtre (28) selon la revendication 4, dans lequel la cartouche de filtre (34) peut, à l'état monté, être retirée hors du support de base (29), d'une manière telle que la matière filtrée accumulée (70) repose dans celle-ci dans la direction de la pesanteur (9).

6. Filtre (28) selon l'une quelconque des revendications précédentes, dans lequel l'entrée (30) se trouve, à l'état monté, dans la direction de la pesanteur (9) sur le côté inférieur (41) du filtre (28), avec une colonne montante (48) menant de l'entrée (30) au côté supérieur (43), et qui débouche dans la cartouche de filtre (34) à partir du côté supérieur (43).

7. Filtre (28) selon l'une quelconque des revendications précédentes, dans lequel la cartouche de filtre (34) présente un élément filtrant adapté à la matière filtrée désirée (70).

8. Procédé de filtration d'eau de refroidissement (12) d'un circuit primaire (14) d'une centrale nucléaire (2) comportant une cuve de réacteur (4) dotée d'une ouverture de sortie (20a, b) d'une conduite d'eau d'alimentation (16a, b) pour l'eau de refroidissement (12), ouverture débouchant à l'intérieur (22) de la cuve de réacteur (4), accessible pendant un arrêt pour révision de la centrale nucléaire (2) et se trouvant sur une paroi intérieure (23) de la cuve de réacteur (4), dans lequel, pendant l'arrêt pour révision .
- on fixe un filtre (28) selon l'une quelconque des revendications 1 à 7 au moyen de son dispositif de fixation (36) avec son entrée (30) fluidiquement raccordée à l'ouverture de sortie (20a, b),
- on fait circuler l'eau de refroidissement (12) à travers l'ouverture de sortie (20a, b),
- on enlève le filtre (28) de l'ouverture de sortie (20a, b).

9. Procédé selon la revendication 8, dans lequel on fait circuler la quantité totale de l'eau de refroidissement (12) à plusieurs reprises à travers le filtre (28).

10. Procédé selon la revendication 8 ou 9, dans lequel
- on interrompt la circulation de l'eau de refroidissement (12),
- on retire une cartouche de filtre (34) remplie de matière filtrée (70) hors du filtre (28) sous l'eau de refroidissement (12),
- on introduit en remplacement une nouvelle cartouche de filtre (34) dans le filtre (28),
- on poursuit la circulation de l'eau de refroidissement (12).
